# EUROPÄISCHE PATENTSCHRIFT

(11) **EP 1 001 196 B1**
(45) Veröffentlichungstag und Bekanntmachung des Hinweises auf die Patenterteilung: **20.10.2004**
(21) Anmeldenummer: 99122532.7
(22) Anmeldetag: 12.11.1999
(51) Int. Cl.: F16K 17/04

(54) **Druckbegrenzungsventil, insbesondere für Fahrzeuge**
Pressure limitting valve, especially for vehicles
Soupape de limitation de pression, en particulier pour des véhicules

(30) Priorität: 13.11.1998 DE 19852409
(43) Veröffentlichungstag der Anmeldung: 17.05.2000
(73) Patentinhaber: Hydraulik-Ring GmbH, 09212 Limbach-Oberfrohna (DE)
(72) Erfinder: Maisch, Dieter, Dipl.-Ing., 72585 Riederich (DE)
(74) Vertreter: Kohl, Karl-Heinz, Dipl.-Ing.

(56) Entgegenhaltungen:
- EP-A- 0 679 807
- EP-A- 0 863 342
- FR-A- 1 057 367
- US-A- 2 059 759

## Beschreibung

Die Erfindung betrifft ein Druckbegrenzungsventil, insbesondere für Fahrzeuge, nach dem Oberbegriff des Anspruches 1.

Solche Druckbegrenzungsventile haben die Aufgabe, einen unzulässig hohen Druck eines Druckmediums, vorzugsweise Hydraulikmediums, in einem Aggregat zu verhindern. Ist der Druck im Druckmedium größer als der zulässige Grenzwert, öffnet das Druckbegrenzungsventil, so daß das am Druckanschluß anstehende Druckmedium über den Tankanschluß zum Tank geführt und damit der Druck abgebaut werden kann. Sobald der Druck am Druckanschluß wieder unter den vorgegebenen Grenzwert fällt, wird der Ventilkörper unter der Gegenkraft in seine Schließstellung bewegt, in der der Druckanschluß vom Tankanschluß getrennt ist. Der Ventilkörper ist als Kugel oder als kugelförmiges Element ausgebildet. Diese Druckbegrenzungsventile bauen verhältnismäßig groß und haben insbesondere eine steigende Druck-Durchfluß-Kennlinie. Mit steigender Durchflußmenge nimmt der Druck bei geöffnetem Druckbegrenzungsventil zu, so daß nachgeschaltete Aggregate beschädigt werden können.

Beim gattungsgemäßen Druckbegrenzungsventil (US-A-2 059 759) ist der Ventilkörper als Lagernadel ausgeführt, die mit ihrem freien Ende in der Dichtstellung auf einem Ventilsitz aufliegt und den Druckanschluß vom Tankanschluß trennt. Der Ventilsitz sowie der die Lagernadel aufnehmende Bauteil müssen gesondert in unterschiedlichen Aufspannungen gefertigt und auch gesondert eingebaut werden. Damit eine zuverlässige Abdichtung gewährleistet ist, müssen bei der Fertigung enge Toleranzen eingehalten werden. Zudem müssen diese beiden Teile genau zueinander montiert werden, damit die Lagernadel in der Dichtstellung auf dem Ventilsitz aufliegt.

Bei einem anderen bekannten Druckbegrenzungsventil (EP-A-0 679 807) ist der Ventilkörper ebenfalls als Lagernadel ausgebildet, die in einem den Ventilsitz enthaltenden Bauteil verschiebbar geführt ist. Die Lagernadel ist in einem dem Bauteil mit Abstand gegenüberliegenden Kolben befestigt, der seinerseits axial verschiebbar in der Bohrung eines Gehäuseteiles gelagert ist. Dieses Druckbegrenzungsventil ist konstruktiv aufwendig ausgebildet und erfordert eine hohe Fertigungsgenauigkeit. Das Druckbegrenzungsventil hat eine steigende Druck-Durchfluß-Kennlinie, so daß die Gefahr besteht, daß bei geöffnetem Druckbegrenzungsventil nachgeschaltete Aggregate beschädigt werden.

Bei einem anderen bekannten Druckbegrenzungsventil (FR-A-1 057 367) ist der Ventilkörper eine Lagernadel, die in einem Schraubteil axial geführt ist und mit einem kegelförmigen Ende in einen Ventilsitz eines weiteren Bauteiles ragt.

Der Erfindung liegt die Aufgabe zugrunde, das gattungsgemäße Druckbegrenzungsventil so auszubilden, daß es bei einfacher Fertigung und Montage sowie bei kleiner Baugröße eine Druck-Durchflußmen-gen-Kennlinie aufweist, die keine oder allenfalls nur eine geringe Steigung aufweist.

Diese Aufgabe wird beim gattungsgemäßen Druckbegrenzungsventil erfindungsgemäß mit den kennzeichnenden Merkmalen des Anspruches 1 gelöst.

Beim erfindungsgemäßen Druckbegrenzungsventil hat die Lagernadel nur sehr geringe Abmessungen, weist insbesondere nur einen sehr geringen Durchmesser auf. Dadurch hat das Druckbegrenzungsventil nur ein geringes Bauvolumen und kann überall dort eingebaut werden, wo nur wenig Einbauraum zur Verfügung steht. Der Durchflußwiderstand kann durch entsprechend große Abströmquerschnitte minimiert werden, so daß der Druck im Druckmedium trotz steigender Durchflußmenge nicht oder nur sehr wenig ansteigt. Dies wird durch den Druckentlastungsraum erreicht, der in Strömungsrichtung des Druckmediums hinter dem Anschlag vorgesehen ist. Auf diese Weise ist sichergestellt, daß nachgeschaltete, mit dem Druckmedium anzutreibende Aggregate nicht beschädigt werden. Da im Bauteil die Lagernadel geführt und gehalten wird sowie der Druckentlastungsraum vorgesehen ist, zeichnet sich das erfindungsgemäße Druckbegrenzungsventil-durch einen einfachen Aufbau sowie eine einfache Herstellung aus. Die Abdichtung des Druckanschlusses gegenüber dem Tankanschluß erfolgt nicht über einen Ventilsitz, sondern als radiale Abdichtung zwischen dem Druckentlastungsraum und dem Anschlag. Bei der Herstellung und auch der Montage des die Lagernadel aufnehmenden Teiles sowie des Anschlages müssen keine geringen Toleranzen sowie hohe Positioniergenauigkeiten eingehalten werden, so daß das Druckbegrenzungsventil kostengünstig gefertigt werden kann.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen
- Fig. 1: eine erste Ausführungsform eines erfindungsgemäßen Druckbegrenzungsventils im Axialschnitt,
- Fig. 2: in einer Darstellung entsprechend Fig. 1 eine zweite Ausführungsform eines erfindungsgemäßen Druckbegrenzungsventils,
- Fig. 3: in einer Darstellung entsprechend Fig. 1 eine dritte Ausführungsform eines erfindungsgemäßen Druckbegrenzungsventils,
- Fig. 4: eine Druck-Durchfluß-Kennlinie des erfindungsgemäßen Druckbegrenzungsventils.

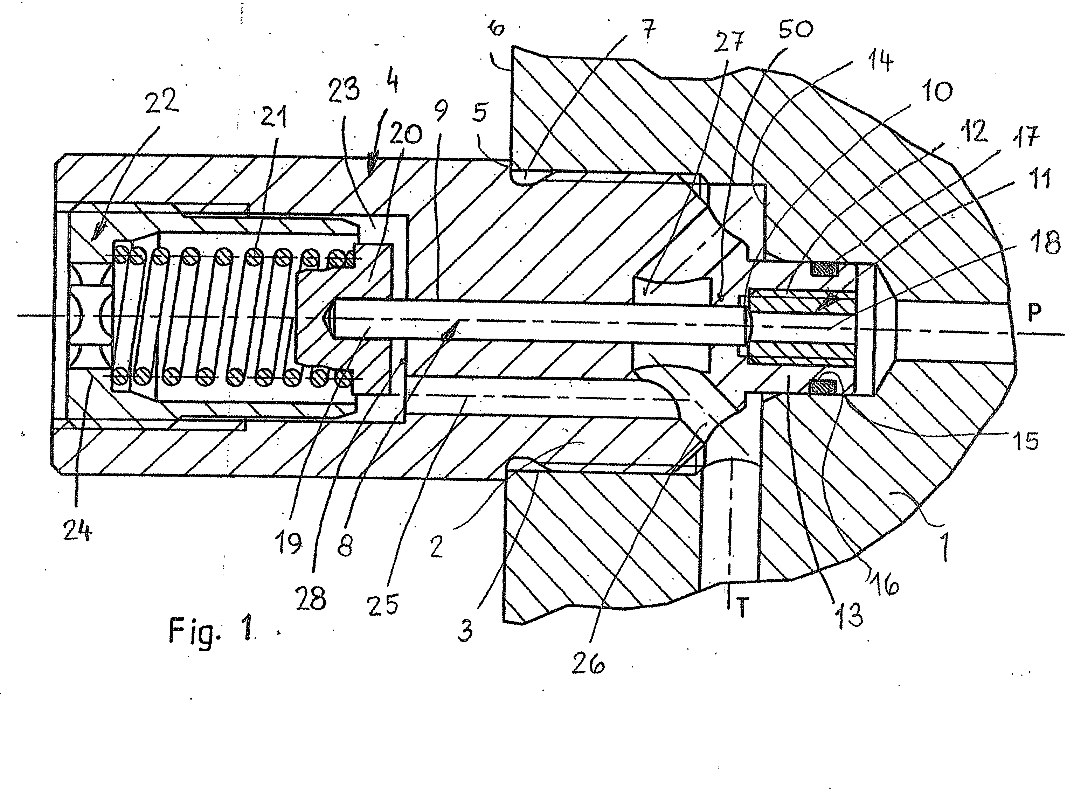

Das Druckbegrenzungsventil gemäß Fig. 1 wird in ein Gehäuse 1 eingesetzt, vorzugsweise eingeschraubt. Das Druckbegrenzungsventil ist zu diesem Zweck mit einem Gewindeteil 2 versehen, der in eine Gewindebohrung 3 des Gehäuses 1 geschraubt wird. Der Gewindeteil 2 ist Bestandteil eines Ventilgehäuses 4, das im Anschluß an den Gewindeteil 2 eine radial über den Gewindeteil 2 vorstehende Schulter 5 hat, mit der das Ventilgehäuse 4 in der Einbaulage an einer Stirnseite 6 des Gehäuses 1 anliegt. Am Übergang von der Schulterfläche 5 zum Gewindeteil 2 ist das Ventilgehäuse 4 mit einer umlaufenden Vertiefung 7 versehen. /

Im Ventilgehäuse 4 ist eine Lagernadel 8 axial verschiebbar in einer Bohrung 9 gelagert. Die Lagernadel 8 hat äußerst kleine Abmessungen. So beträgt ihr Durchmesser im Ausführungsbeispiel nur 2 mm. Die Lagernadel 8 wird durch ein Bauteil eines Nadellagers gebildet, das kostengünstig in der Anschaffung ist. Die Lagernadel 8 liegt mit einem Ende 10 an einem Anschlag 11 an, der in eine endseitige Gewindebohrung 12 in einem axialen Ansatz 13 des Gewindeteiles 2 geschraubt ist. Der Ansatz 13 hat kleineren Außendurchmesser als der Gewindeteil 2. Im Boden 14 der Gewindebohrung 3 befindet sich zentrisch eine Vertiefung 15, in die der Ansatz 13 des Ventilgehäuses 4 abgedichtet eingesetzt ist. Der Ansatz 13 ist nahe seiner freien Stirnseite mit einer Ringnut 16 versehen, die einen Dichtring 17 aufnimmt, der an der Seitenwand der Vertiefung 15 dichtend anliegt.

In die Vertiefung 15 mündet eine Druckleitung P für Druckmedium, vorzugsweise Hydraulikmedium. Es gelangt in die zentrale axiale Durchgangsöffnung 18 des Anschlages 11. Die Durchgangsöffnung 8 wird durch die Lagernadel 8 geschlossen.

Das andere Ende 19 der Lagernadel 8 trägt einen Federteller 20, an dem sich eine Druckfeder 21 abstützt. Sie liegt in einem buchsenförmigen Gehäusedeckel 22, der als Schraubteil ausgebildet ist, das in eine stirnseitig offene Aufnahme 23 des Ventilgehäuses 4 geschraubt ist. Der Gehäusedeckel 22 hat einen Boden 24, an dem sich die Druckfeder 21 abstützt. Der Federteller 20 ragt in der Ausgangsstellung der Lagernadel 8 teilweise in den Gehäusedeckel 22.

Der Aufnahmeraum 23 ist über wenigstens eine Bohrung 25 mit einem Tankanschluß 26 leitungsverbunden, der am konisch ausgebildeten Übergang vom Gewindeteil 2 zum Ansatz 13 des Ventilgehäuses 4 vorgesehen ist. Der ventilgehäuseseitige Tankanschluß 26 ist mit einem Tankanschluß T des Gehäuses 1 verbunden. Der Tankanschluß 26 mündet in einen Zwischenraum 27, der im Gewindeteil 2 des Ventilgehäuses 4 vorgesehen ist und von der Lagernadel 8 axial durchquert wird. Der Zwischenraum 27 hat geringen axialen Abstand vom Anschlag 11. Zwischen dem Anschlag 11 und dem Zwischenraum 27 verbleibt ein Ringsteg 50, an dessen Innenwand die Lagernadel 8 anliegt. Zwischen diesem Steg 50 und der Lagernadel 8 wird die radiale Dichtfunktion des Ventils erreicht.

Der Druckanschluß P ist mit einem (nicht dargestellten) Verbraucher verbunden, der mittels Druckmedium betätigt wird. Über die Durchgangsöffnung 18 des Anschlages 11 liegt das unter Druck stehende Hydraulikmedium auch an der Stirnseite der Lagernadel 8 an, die unter der Kraft der Druckfeder 21 am Anschlag 11 anliegt und die Durchgangsöffnung 18 schließt. Die Kraft der Druckfeder 21 ist so eingestellt, daß die Lagernadel 8 ihre in Fig. 1 dargestellte Schließlage einnimmt, solange der Druck des Hydraulikmediums einen vorgegebenen Druckwert nicht überschreitet. Die Kraft der Druckfeder 21 kann mittels des Gehäusedeckels 22 stufenlos eingestellt werden. Je nach dem Grenzwert, bei dem das Druckbegrenzungsventil öffnen soll, wird der Gehäusedeckel 22 unterschiedlich weit in den Aufnahmeraum 23 des Ventilgehäuses 4 geschraubt. Auf diese Weise ist eine einfache Anpassung des Druckbegrenzungsventils an unterschiedliche Einsatzfälle möglich. Der Gehäusedeckel 22 liegt versenkt im Aufnahmeraum 23, so daß er nicht über das Ventilgehäuse 4 vorsteht. Sobald der Druck des Hydraulikmediums am Druckanschluß P einen vorgegebenen Druckwert überschreitet, wird die Lagernadel 8 gegen die Kraft der Druckfeder 21 so weit zurückgeschoben, daß das Druckmedium vom Druckanschluß P über die Durchgangsöffnung 18 des Anschlages 11 und den Zwischenraum 27 zum Tankanschluß 26 des Ventilgehäuses 4 strömen kann. Von hier kann das Druckmedium über den Tankanschluß T des Gehäuses 1 zum Tank strömen. Auf diese Weise wird ein unzulässig hoher Druckaufbau zuverlässig verhindert. Sobald der Druck abgebaut ist, wird die Lagernadel 8 durch die Druckfeder 21 in ihre Schließstellung verschoben, in der sie die Durchgangsöffnung 18 der Buchse 11 verschließt und radial am Steg 50 dichtet.

Da die Lagernadel 8 eingesetzt wird, die nur sehr geringe Abmessungen, insbesondere nur einen sehr geringen Durchmesser hat, kann das Druckbegrenzungsventil äußerst kompakt gebaut werden. Die Lagernadel 8 wird über den größten Teil ihrer Länge im Ventitgehäuse 4 geführt, wodurch sich durch die Scherkräfte im Öl eine optimale Dämpfung ergibt. Hierzu trägt bei, daß das Druckmedium beim Öffnen des Druckbegrenzungsventils über die Bohrung 25 auch in den Aufnahmeraum 23 gelangen kann. Dadurch wird die Bewegung des Federtellers 20 im Aufnahmeraum 23 sowie im Gehäusedeckel 22 durch das Druckmedium gedämpft.

In der Schließstellung der Lagernadel 8 haben der Federteller 20 und der Gehäusedeckel 22 Abstand vom Boden 28 des Aufnahmeraumes 23. Dadurch kann der Gehäusedeckel 22 in ausreichendem Maße im Aufnahmeraum 23 axial verstellt werden, um den für den vorgesehenen Einsatzfall des Druckbegrenzungsventiles erforderlichen Grenzdruck einzustellen.

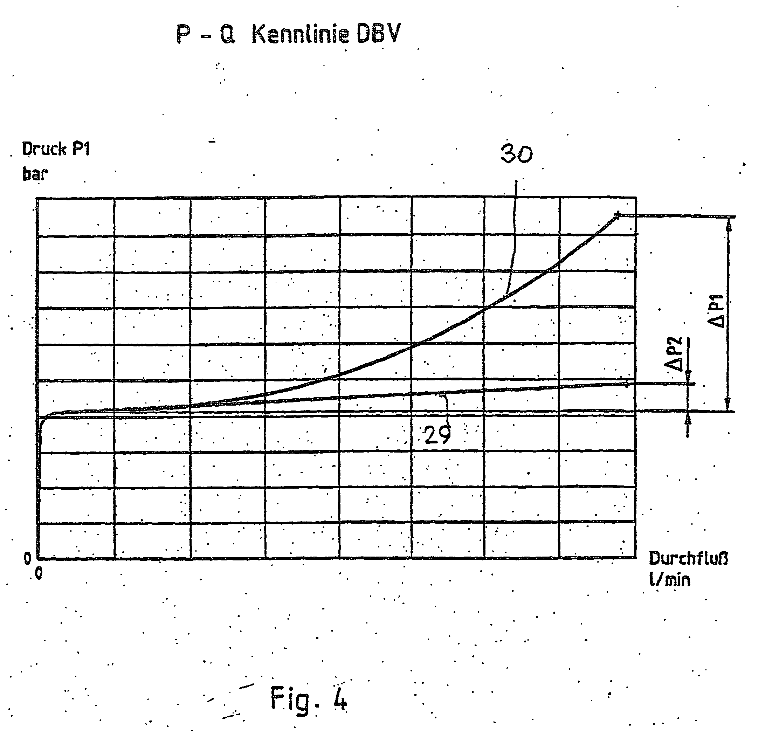

Fig. 4 zeigt die Druck-Durchfluß-Kennlinie 29 des Druckbegrenzungsventils. Die Kennlinie 29 hat nahezu keine Steigung, so daß der Druckunterschied Δp² über die Größe der Durchflußmenge nur sehr gering ist. Im Vergleich hierzu ist in Fig. 4 auch die entsprechende Kennlinie 30 für herkömmliche Druckbegrenzungsventile eingezeichnet. Bei ihnen ist der Druckunterschied Δp¹ um ein Mehrfaches größer. Der geringe Druckunterschied Δp² beim beschriebenen Druckbegrenzungsventil nach Fig. 1 ist darauf zurückzuführen, daß der Durchflußwiderstand für das Druckmedium durch entsprechend große Abströmquerschnitte minimiert ist. Wird das Druckbegrenzungsventil bei Überschreiten des vorgegebenen Druckes geöffnet, kann das Druckmedium rasch über den groß dimensionierten Zwischenraum 27 und den Tankanschluß 26 sowie die Bohrung 25 abströmen, so daß der Druckanstieg minimal ist. Dadurch ist zuverlässig vermieden, daß infolge des Druckanstieges bei geöffnetem Druckbegrenzungsventil nachgeschaltete Bauteile beschädigt werden.

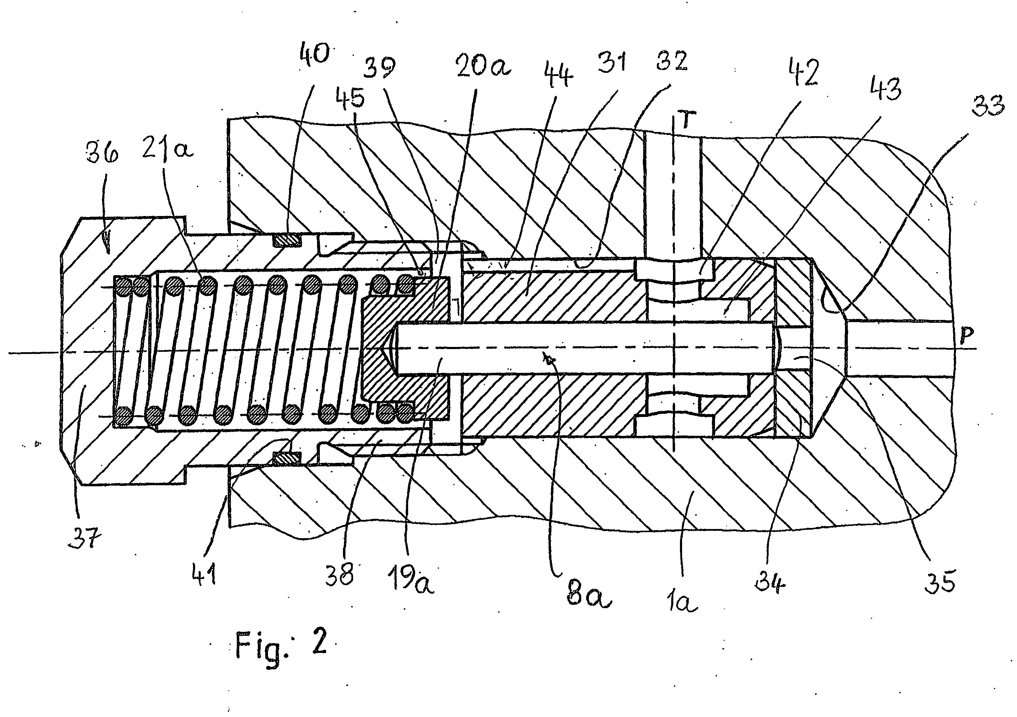

Beim Ausführungsbeispiel nach Fig. 2 ist die Lagernadel 8a in einem Führungsteil 31 verschiebbar gelagert. Es ist in einen Aufnahmeraum 32 eingesetzt. Er hat einen konischen Boden 33, in den die Druckleitung P mündet. Im Aufnahmeraum 32 befindet sich eine Scheibe 34, die am Übergang vom konischen Boden 33 in die zylindrische Wandung liegt. Die Scheibe 34 hat eine zentrale Öffnung 35, die koaxial zur Lagernadel 8a und zur Druckleitung P liegt. An der Scheibe 34 liegt das Führungsteil 31 mit seiner Stirnseite an. Die Lagernadel 8a liegt in der Schließstellung am Rand der Öffnung 35 der Scheibe 34 an. Auf dem über das Führungsteil 31 ragenden Ende 19a der Lagernadel 8a sitzt der Federteller 20a, an dem sich die Druckfeder a abstützt. Sie ist in einer Buchse 36 aufgenommen, die einen geschlossenen Boden 37 aufweist. Das vom Boden 37 abgewandte Ende der Buchse 36 ist als Gewindeteil 38 ausgebildet, mit dem die Buchse 36 in einen Aufnahmeraum 39 des Gehäuses 1a geschraubt wird. Aufgrund der Schraubverbindung kann die dem Druckmedium entgegengerichtete Kraft der Druckfeder 21a stufenlos eingestellt werden. Die Buchse 36 liegt im Bereich außerhalb des Gewindeteils 38 mittels eines Dichtringes 40 abgedichtet an der Wandung des Aufnahmeraumes 39 an. Der Dichtring 40 ist in einer Ringnut 41 in der Außenwandung der Buchse 36 aufgenommen. Der Federteller 20a liegt in der Schließstellung der Lagernadel 8a nahezu vollständig innerhalb der Buchse 36.

Das Führungsteil 31, das ein von der Buchse 36 unabhängiges Bauteil ist, ist in seiner Mantelfläche mit einer Ringnut 42 versehen, die mit einem Tankanschluß T des Gehäuses 1 a und einem Aufnahmeraum 43 im Führungsteil 31 verbunden ist. Dieser Aufnahmeraum 43 wird vorteilhaft elektrochemisch hergestellt. Dadurch ist es möglich, trotz des großen Querschnittes des Aufnahmeraumes 43 das Führungsteil 31 einstückig auszubilden. Der Aufnahmeraum 43 hat von der Scheibe 34 einen geringen Abstand und wird von der Lagernadel 8a axial durchsetzt. Das Führungsteil 31 weist am Umfang mindestens eine axial verlaufende Nut 44 auf, welche die Ringnut 42 mit dem Aufnahmeraum 39 verbindet. Bis auf die Nut 44 liegt das Führungsteil 31 an der Innenwand des Aufnahmeraumes 32 abgedichtet an. Alternativ kann auch eine Drosselstelle über den Außendurchmesser des Führungsteiles 31 im Bereich zwischen der Ringnut 42 und dem Aufnahmeraum 39 und dem Bohrungsdurchmesser des Gehäuses 1a geschaffen werden.

Überschreitet der Druck im Hydraulikmedium einen vorgegebenen Wert, dann wird die Lagernadel 8a gegen die Kraft der Druckfeder 21a so weit zurückgeschoben, bis das Druckmedium über die Öffnung 35 und den Aufnahmeraum 43 zum Tankanschluß T strömen kann, der mit der Ringnut 42 verbunden ist. Dadurch ist ein rascher Druckabfall sichergestellt. Ein Teil des Druckmediums strömt über die Nut 44 in den Aufnahmeraum 39. Wie beim vorigen Ausführungsbeispiel ist der Außendurchmesser des Federtellers 20a kleiner als der Innendurchmesser der Buchse 36, so daß das Druckmedium über den Ringspalt 45 zwischen dem Federteller 20a und der Buchse 36 in die Buchse strömen kann. Dadurch wird eine optimale Dämpfung beim Verschieben des Federtellers 20a erreicht. Über die radiale Breite des Ringspaltes 45 läßt sich die Dämpfung optimal einstellen. Auch über die Querschnittsausbildung der Nut 44 läßt sich die Dämpfung auf den jeweiligen Einsatzfall des Druckbegrenzungsventiles einstellen. Es können auch mehrere Nuten am Führungsteil 31 vorgesehen sein, die jeweils den Aufnahmeraum 39 mit der Ringnut 42 verbinden.

Der über das Gehäuse 1a überstehende Teil der Buchse 36 ist verbreitert ausgebildet, so daß sie zur Einstellung der Federkraft einfach gedreht werden kann. Die Buchse 36 hat einen ausreichend großen Abstand vom Führungsteil 31, so daß die Federkraft in einem ausreichend großen Bereich eingestellt werden kann. Die Lagernadel 8a wird nahezu über ihre gesamte Länge im Führungsteil 31 geführt. Diese optimale Führung trägt aufgrund der Scherkräfte des Öles zur hohen Dämpfung der Lagernadel 8a beim Verschieben bei.

Auch dieses Druckbegrenzungsventil weist die Druck-Durchfluß-Kennlinie 29 (Fig. 4) auf. Mit zunehmender Druchflußmenge ändert sich der Druck nur wenig, d.h. die Druckdifferenz Δp₂ ist sehr gering.

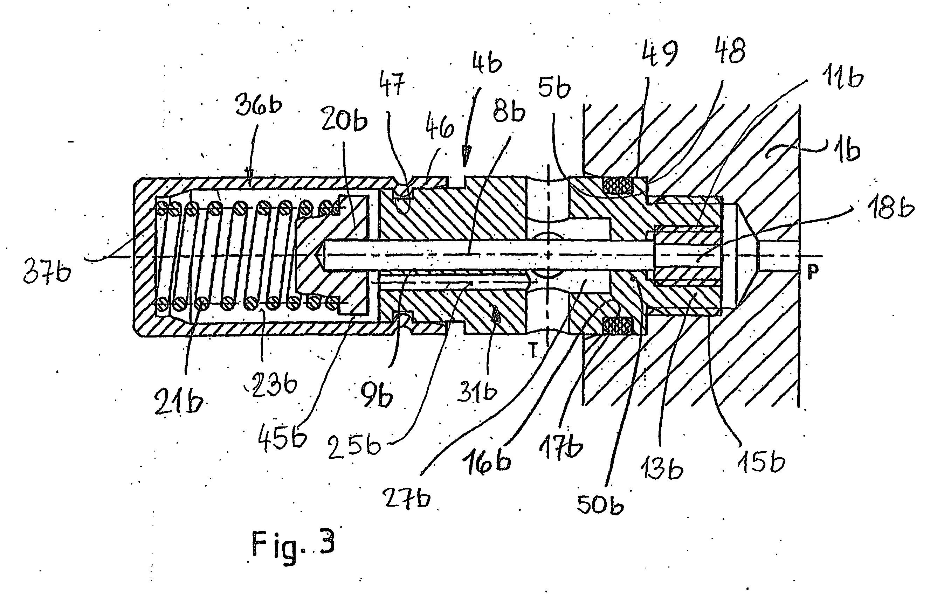

Das Druckbegrenzungsventil gemäß Fig. 3 ist für einen Tankeinbau vorgesehen und befindet sich über den größten Teil seiner Länge außerhalb des Gehäuses 1b. Das Druckbegrenzungsventil hat die Buchse 36b, die im Unterschied zum Ausführungsbeispiel nach Fig. 2 ein verlängertes Ende 46 hat, mit dem sie außerhalb des Gehäuses 1b axial fest mit dem Führungsteil 31 b verbunden ist. Es ist an seinem buchsenseitigen Ende mit einer umlaufenden Ringnut 47 versehen, in die das verlängerte Ende 46 der Buchse 36b mit einem plastisch verformtem Abschnitt eingreift. Das Führungsteil 31b hat den Ansatz 13b, der als Gewindeteil ausgebildet ist, mit dem das Führungsteil 31 b und damit das gesamte Druckbegrenzungsventil in die Vertiefung 15b des Gehäuses 1b eingreift. Die Vertiefung 15b ist als Gewindebohrung ausgebildet, in welche der Ansatz 13b des Führungsteiles 31b geschraubt wird. Der Ansatz 13b hat einen kleineren Durchmesser als der übrige Teil des Führungsteiles 31b. In der Einbaulage liegt das Führungsteil 31b mit der radialen Schulterfläche 5b am Boden 48 einer Vertiefung 49 an, die im Gehäuse 1b vorgesehen ist. Die Gewindebohrung 15b mündet zentrisch in den Boden 48 der Vertiefung 49. Das Führungsteil 31b liegt mit einem Dichtring 17b, der in der Ringnut 16b des Führungsteiles 31b untergebracht ist, abgedichtet an der Wandung der Vertiefung 49 an.

In den Ansatz 13b ist der Anschlag 11 b eingesetzt, vorzugsweise eingeschraubt oder eingepreßt. Er hat die zentrale Durchgangsöffnung 18b, die koaxial zur Druckleitung P des Gehäuses 1b liegt. Die Durchgangsöffnung 18b wird wie beim Ausführungsbeispiel nach Fig. 1 durch die Lagernadel 8b geschlossen, die in der Bohrung 9b des Führungsteiles 31b nahezu über ihre gesamte Länge geführt ist. Das in die Buchse 36b ragende Ende der Lagernadel 8b trägt den Federteller 20b, an dem sich die Druckfeder 21b abstützt. Mit ihrem anderen Ende ist die Druckfeder 21 b am Boden 37b der Buchse 36b abgestützt.

Außerhalb des Gehäuses 1b ist das Führungsteil 31b mit dem Tankanschluß T versehen, der mit dem Aufnahmeraum 27b verbunden ist.

Die Lagernadel 8b liegt in der Ausgangsstellung am Anschlag 11 b an und verschließt dessen Durchgangsöffnung 18b. Die Lagernadel 86 dichtet radial zum Führungsteil 31b an dessen Ringsteg 50b. Übersteigt der Druck im Druckmedium einen vorgegebenen Wert, dann wird die Lagernadel 8b gegen die Kraft der Druckfeder 21 b so weit zurückgeschoben, daß das Druckmedium vom Druckanschluß P über die Durchgangsöffnung 18b in den Zwischenraum 27b gelangt. Von hier aus kann das Druckmedium über den Tankanschluß T zum Tank abströmen. Der Zwischenraum 27b ist über die Bohrung 25b mit dem Aufnahmeraum 23b verbunden, so daß ein Teil des Druckmediums auch in den Aufnahmeraum 23b gelangt und in der beschriebenen Weise die Bewegung der Lagernadel 8b dämpft. Zwischen dem Federteller 20b und der Innenwandung der Buchse 36b ist der Ringspalt 45b vorgesehen, dessen Größe die Dämpfungswirkung beeinflußt.

Das Führungsteil 31b und die Buchse 36b lassen sich einfach axial fest miteinander verbinden. Die Buchse 36b wird auf das Führungsteil 31b geschoben. Anschließend wird die Wandung der Buchse 36b in die Ringnut 47 des Führungsteils 31b eingebördelt. Diese Baueinheit läßt sich anschließend mit dem Ansatz 13b einfach in die Gewindebohrung 15b des Gehäuses 1b schrauben. Die Vorspannkraft der Druckfeder 21 b wird bei der Verbindung der Buchse 36b mit dem Führungsteil 31b eingestellt. Die Buchse 36b wird so weit auf das Führungsteil 31 b geschoben, bis die Druckfeder 21 b die erforderliche Vorspannung hat. Dann wird die Wandung der Buchse 36b in die Ringnut 47 des Führungsteils 31b eingerollt.

Auch dieses Druckbegrenzungsventil weist die Kennlinie 29 gemäß Fig. 4 auf. Wie bei den vorhergehenden Ausführungsformen wird der Durchflußwiderstand des Druckmediums durch das Druckbegrenzungsventil durch entsprechend große Abströmquerschnitte minimiert.

Die beschriebenen Druckbegrenzungsventile basieren auf einer günstigen, handelsüblichen Lagernadel als Kolben. Das Kolbenventil verändert seine Kennlinie über die Lebensdauer auch bei einer hohen Anzahl von Betätigungen nicht. Um ein kleines Bauvolumen zu realisieren, wird die im Durchmesser kleine Lagernadel gewählt. In den dargestellten Ausführungsbeispielen wurde der Durchmesser 2 mm gewählt. Um dabei einen nur geringen Druckanstieg über dem Durchfluß zu erreichen, müssen die Abflußquerschnitte groß dimensioniert sein. Durch das Ausarbeiten des Aufnahmeraumes 27, 27b, 43 (auf großem Durchmesser) auf elektrochemischer Basis kann das Führungsteil, welches alle hohen maßlichen und geometrischen Anforderungen enthält, in einer Spannung mechanisch fertig bearbeitet werden, so daß keine Fügeteile mit anschließendem zweiten mechanischem Bearbeitungsgang notwendig sind.

An den eingesetzten Anschlag sind keinerlei maßliche oder geometrische Ansprüche gestellt. Er hält nur die einen Kolben bildende Lagernadel 8, 8a, 8b in ihrer Ruhelage. Die Dichtheit des Ventils bis zum Erreichen des Öffnungsdruckes wird durch das kleine Radialspiel zwischen Lagernadel und Führungsteil erreicht.

## Patentansprüche

1. Druckbegrenzungsventil, insbesondere für Fahrzeuge, mit einem als Lagernadel ausgebildeten Ventilkörper (8, 8a, 8b), der über wenigstens etwa seine halbe Länge in einem Bauteil (4, 31, 4b) geführt ist, einen Druckanschluß (P) von einem Tankanschluß (T) trennt und bei Überschreiten eines vorgegebenen Druckes eines Druckmediums am Druckanschluß (P) gegen eine Gegenkraft in eine Freigabestellung verstellbar ist, in der die Lagernadel (8, 8a, 8b) die Verbindung zwischen dem Druckanschluß(P) und dem Tankanschluß (T) freigibt, wobei im Bauteil (4, 31, 4b) ein Druckentlastungsraum (27, 43, 27b) vorgesehen ist,
**dadurch gekennzeichnet, daß** der Druckentlastungsraum (27, 43, 27b) in Strömungsrichtung des Druckmediums hinter einem Anschlag (11, 34, 11 b) liegt, an dem die Lagernadel (8, 8a, 8b) unter der Gegenkraft anliegt, und daß zwischen dem Druckentlastungsraum (27, 43, 27b) und dem Anschlag (11, 34, 11 b) zwischen der Lagernadel (8, 8a, 8b) und dem Bauteil (4, 31, 4b) eine radiale Abdichtung erfolgt.

2. Druckbegrenzungsventil nach Anspruch 1,
**dadurch gekennzeichnet, daß** der Anschlag (11, 34, 11b) eine Durchgangsöffnung (18, 35, 18b) hat, die mit dem Druckanschluß (P) verbunden ist.

3. Druckbegrenzungsventil nach Anspruch 1 oder 2,
**dadurch gekennzeichnet, daß** der Anschlag (11, 34, 11 b) in das Bauteil (4, 4b) des Druckbegrenzungsmentils eingepreßt, eingeschraubt oder nur eingelegt ist.

4. Druckbegrenzungsventil nach einem der Ansprüche 1 bis 3,
**dadurch gekennzeichnet, daß** der Anschlag (34) durch das Bauteil (31) in seiner Einbaulage gehalten ist.

5. Druckbegrenzungsventil nach einem der Ansprüche 1 bis 4,
**dadurch gekennzeichnet, daß** die Lagernadel (8, 8a, 8b) an ihrem vom Druckanschluß (P) abgewandten Ende einen Federteller (20, 20a, 20b) trägt, an dem sich eine Druckfeder (21,21 a, 21 b) abstützt.

6. Druckbegrenzungsventil nach Anspruch 5,
**dadurch gekennzeichnet, daß** die Druckfeder (21, 21 a, 21 b) in einem Buchsenteil (22, 36, 36b) untergebracht ist.

7. Druckbegrenzungsventil nach Anspruch 6,
**dadurch gekennzeichnet, daß** das Buchsenteil (22, 36, 36b) ein vom Bauteil (4, 31, 4b) gesondertes Bauelement ist.

8. Druckbegrenzungsventil nach Anspruch 6 oder 7,
**dadurch gekennzeichnet, daß** das Buchsenteil (36) und das Bauteil (31) in ein weiteres Bauteil (1 a) eingesetzt, vorzugsweise eingeschraubt oder eingepreßt sind.

9. Druckbegrenzungsventil nach Anspruch 6 oder 7,
**dadurch gekennzeichnet, daß** das Buchsenteil (36b) und das Bauteil (4b) formschlüssig miteinander verbunden sind.

10. Druckbegrenzungsventil nach Anspruch 9,
**dadurch gekennzeichnet, daß** das Buchsenteil (36b) durch plastische Verformung mit dem Bauteil (4b) verbunden ist.

11. Druckbegrenzungsventil nach einem der Ansprüche 1 bis 10,
**dadurch gekennzeichnet, daß** der Tankanschluß (T) mit einem den Federteller (20, 20a, 20b) aufweisenden Aufnahmeraum (23, 39, 23b) leitungsverbunden ist.

12. Druckbegrenzungsventil nach Anspruch 11,
**dadurch gekennzeichnet, daß** das Bauteil (4, 31, 4b) wenigstens eine Bohrung (25, 25b) und/oder wenigstens eine Nut (44) und/oder eine sonstige Drosselstelle aufweist, die den Tankanschluß (T) mit dem Aufnahmeraum (23, 39, 23b) verbindet.

13. Druckbegrenzungsventil nach Anspruch 11 oder 12,
**dadurch gekennzeichnet, daß** der Außendurchmesser des Federtellers (20, 20a, 20b) kleiner ist als der Innendurchmesser des Aufnahmeraumes (23, 39, 23b).

14. Druckbegrenzungsventil nach einem der Ansprüche 1 bis 13,
**dadurch gekennzeichnet, daß** die Lagernadel (8, 8a, 8b) einen Durchmesser von kleiner als etwa 5 mm, vorzugsweise von etwa 2 mm, aufweist.

15. Druckbegrenzungsventil nach einem der Ansprüche 1 bis 14,
**dadurch gekennzeichnet, daß** die Lagernadel (8, 8a, 8b) eine Länge von kleiner als etwa 25 mm aufweist.

16. Druckbegrenzungsventil nach einem der Ansprüche 1 bis 15,
**dadurch gekennzeichnet, daß** ein Teil des Druckbegrenzungsventils in das weitere Bauteil (1,1a,1 b) geschraubt oder eingepreßt ist, das eine mit dem Druckanschluß (P) verbundene Druckleitung aufweist.

## Claims

1. A pressure limiting valve, particularly for vehicles, comprising a valve body (8, 8a, 8b) designed as a bearing needle, which is guided over at least approximately half its length in a component (4, 31, 4b), separates a pressure connection (P) from a tank connection (T) and is movable, when a predefined pressure of a pressure medium at the pressure connection (P) is exceeded, against a counteracting force into a release position in which the bearing needle (8, 8a, 8b) releases the connection between the pressure connection (P) and the tank connection (T), a pressure relief space (27, 43, 27b) being provided in the component (4, 31, 4b),
**characterised in that** the pressure relief space (27, 43, 27b) is located behind a stop (11, 34, 11b), in the flow direction of the pressure medium, which the bearing needle (8, 8a, 8b) abuts under the counteracting force, and **in that** between the pressure relief space (27, 43, 27b) and the stop (11, 34, 11b) a radial seal is effected between the bearing needle (8, 8a, 8b) and the component (4, 31, 4b).

2. A pressure limiting valve according to Claim 1,
**characterised in that** the stop (11, 34, 11b) has a passage opening (18, 35, 18b) which is connected to the pressure connection (P).

3. A pressure limiting valve according to Claim 1 or 2,
**characterised in that** the stop (11, 34, 11b) is pressed, screwed or simply placed into the component (4, 4b) of the pressure limiting valve.

4. A pressure limiting valve according to one of Claims 1 to 3,
**characterised in that** the stop (34) is held in its installation position by means of the component (31).

5. A pressure limiting valve according to one of Claims 1 to 4,
**characterised in that** at its end directed away from the pressure connection (P) the bearing needle (8, 8a, 8b) carries a spring plate (20, 20a, 20b) on which a compression spring (21, 2 1 a, 21b) is supported.

6. A pressure limiting valve according to Claim 5,
**characterised in that** the compression spring (21, 21a, 21b) is housed in a bushing part (22, 36, 36b).

7. A pressure limiting valve according to Claim 6,
**characterised in that** the bushing part (22, 36, 36b) is a structural element isolated from the component (4, 31, 4b).

8. A pressure limiting valve according to Claim 6 or 7,
**characterised in that** the bushing part (36) and the component (31) are inserted, preferably screwed or pressed into another component (1a).

9. A pressure limiting valve according to Claim 6 or 7,
**characterised in that** the bushing part (36b) and the component (4b) are connected to one another in a positively locking manner.

10. A pressure limiting valve according to Claim 9,
**characterised in that** the bushing part (36b) is connected to the component (4b) by means of plastic deformation.

11. A pressure limiting valve according to one of Claims 1 to 10,
**characterised in that** the tank connection (T) is line-connected to a receiving space (23, 39, 23b) comprising the spring plate (20, 20a, 20b).

12. A pressure limiting valve according to Claim 11,
**characterised in that** the component (4, 31, 4b) has at least one bore (25, 25b) and/or at least one groove (44) and/or a further restriction point which connects the tank connection (T) to the receiving space (23, 39, 23b).

13. A pressure limiting valve according to Claim 11 or 12,
**characterised in that** the exterior diameter of the spring plate (20, 20a, 20b) is smaller than the internal diameter of the receiving space (23, 39, 23b).

14. A pressure limiting valve according to one of Claims 1 to 13,
**characterised in that** the bearing needle (8, 8a, 8b) has a diameter of less than about 5 mm, preferably about 2 mm.

15. A pressure limiting valve according to one of Claims 1 to 14,
**characterised in that** the bearing needle (8, 8a, 8b) has a length of less than about 25 mm.

16. A pressure limiting valve according to one of Claims 1 to 15,
**characterised in that** a part of the pressure limiting valve is screwed or pressed into the other component (1, 1a, 1b) which has a pressure line connected to the pressure connection (P).

## Revendications

1. Valve de limitation de pression, en particulier pour des véhicules automobiles, comportant un corps de valve (8, 8a, 8b) réalisé sous forme d'aiguille à palier, qui est guidé au moins approximativement sur la moitié de sa longueur dans un composant (4, 31, 4b), qui sépare un raccord de pression (P) d'un raccord de réservoir (T) et qui, en cas de dépassement d'une pression prédéterminée d'un fluide sous pression au niveau du raccord de pression (P), est déplaçable à l'encontre d'une force antagoniste jusque dans une position de libération dans laquelle l'aiguille à palier (8, 8a, 8b) libère la liaison entre le raccord de pression (P) et le raccord de réservoir (T), un compartiment de décharge de pression (27, 43, 27b) étant prévu dans le composant (4, 31, 4b), **caractérisée en ce que** le compartiment de décharge de pression (27, 43, 27b) se trouve, en direction d'écoulement du fluide sous pression, en arrière d'une butée (11, 34, 11b) contre laquelle prend appui l'aiguille à palier (8, 8a, 8b) sous la force antagoniste, et **en ce qu'**un étanchement radial s'effectue entre le compartiment de décharge de pression (27, 43, 27b) et la butée (11, 34, 11b) entre l'aiguille à palier (8, 8a, 8b) et le composant (4, 31, 4b).

2. Valve de limitation de pression selon la revendication 1, **caractérisée en ce que** la butée (11, 34, 11b) présente un perçage (18, 34, 18b) qui est en communication avec le raccord de pression (P).

3. Valve de limitation de pression selon l'une ou l'autre des revendications 1 et 2, **caractérisée en ce que** la butée (11, 34, 11b) est enfoncée à la presse, vissée ou simplement posée dans le composant (4, 4b) de la valve de limitation de pression.

4. Valve de limitation de pression selon l'une des revendications 1 à 3, **caractérisée en ce que** la butée (34) est retenue dans sa position montée par le composant (31).

5. Valve de limitation de pression selon l'une des revendications 1 à 4, **caractérisée en ce que** l'aiguille à palier (8, 8a, 8b) porte à son extrémité détournée du raccord de pression (P) une coupelle de ressort (20, 20a, 20b) contre laquelle prend appui un ressort de compression (21, 21a, 21b).

6. Valve de limitation de pression selon la revendication 5, **caractérisée en ce que** le ressort de compression (21, 21a, 21b) est logé dans une partie formant douille (22, 36, 36b).

7. Valve de limitation de pression selon la revendication 6, **caractérisée en ce que** la partie formant douille (22, 36, 36b) est un élément constitutif séparé du composant (4, 31, 4b).

8. Valve de limitation de pression selon l'une ou l'autre des revendications 6 et 7, **caractérisée en ce que** la partie formant douille (36) et le composant (31) sont mis en place, de préférence vissés ou enfoncés à la presse dans un autre composant (la).

9. Valve de limitation de pression selon l'une ou l'autre des revendications 6 et 7, **caractérisée en ce que** la partie formant douille (36b) et le composant (4b) sont reliés en coopération de formes l'un à l'autre.

10. Valve de limitation de pression selon la revendication 9, **caractérisée en ce que** la partie formant douille (36b) est reliée par déformation plastique au composant (4b).

11. Valve de limitation de pression selon l'une des revendications 1 à 10, **caractérisée en ce que** le raccord de réservoir (T) est relié par une conduite à un compartiment de logement (23, 39, 23b) comprenant la coupelle de ressort (20, 20a, 20b).

12. Valve de limitation de pression selon la revendication 11, **caractérisée en ce que** le composant (4, 31, 4b) présente au moins un perçage (25, 25b) et/ou au moins une gorge (44) et/ou un autre étranglement qui relie le raccord de réservoir (T) au compartiment de logement (23, 39, 23b).

13. Valve de limitation de pression selon l'une ou l'autre des revendications 11 et 12, **caractérisée en ce que** le diamètre extérieur de la coupelle de ressort (20, 20a, 20b) est inférieur au diamètre intérieur du compartiment de logement (23, 39, 23b).

14. Valve de limitation de pression selon l'une des revendications 1 à 13, **caractérisée en ce que** l'aiguille à palier (8, 8a, 8b) présente un diamètre inférieur à environ 5 mm, de préférence égal à environ 2 mm.

15. Valve de limitation de pression selon l'une des revendications 1 à 14, **caractérisée en ce que** l'aiguille à palier (8, 8a, 8b) présente une longueur inférieure à environ 25 mm.

16. Valve de limitation de pression selon l'une des revendications 1 à 15, **caractérisée en ce qu'**une partie de la valve de limitation de pression est vissée ou enfoncée à la presse dans l'autre composant (1, 1a, 1b) qui comprend une conduite sous pression reliée au raccord de pression (P).
